# EUROPEAN PATENT APPLICATION

(11) **EP 4 537 717 A1**
(43) Date of publication of application: **16.04.2025**
(21) Application number: 23203609.5
(22) Date of filing: 13.10.2023
(51) Int. Cl.: A47J 31/58

(54) **BEVERAGE MAKER WITH LATCHING MECHANISM**

(71) Applicant: B/E Aerospace, Inc., Winston-Salem, NC 27105 (US)
(72) Inventor: PANJER, Frederik Adrian Stephan, 3992 AD Houten (NL)
(74) Representative: Dehns

(57) **Abstract**

A beverage maker for a vehicle galley compartment, the beverage maker comprising: a housing comprising a dispensing region configured to receive a beverage container in a beverage receiving position; a latching mechanism (120) configured to move relative to the housing between a first position and a second position; wherein, when in the first position the latching mechanism (120) is configured to retain the beverage container in the beverage receiving position, and when in the second position the latching mechanism (120) is configured to allow the beverage container to be placed in or removed from the beverage receiving position; and an electrical actuator (130) configured to control movement of the latching mechanism (120) relative to the housing from the second position to the first position.

## Description

### Technical field

This disclosure relates to a beverage maker for a vehicle galley compartment, and to a latching mechanism to retain a beverage container therein.

### Background

It is known in the art that elements in vehicle galley compartments (sometimes referred to as galley inserts, or GAIN) must be retained in place, particularly when the vehicle is moving, for safety reasons. GAIN elements must be accessible when required, but also held in place when not being actively used. Example vehicle galleys include those in aircraft, trains and boats. Beverage makers are normally an installed GAIN in a vehicle compartment, however a beverage container into which a beverage is dispensed will need to be removed for dispensing the beverage. For example, a coffee maker will dispense coffee into a carafe (i.e. a beverage container), which then must be removed to pour an individual cup of coffee. A coffee maker may also have a brew cup located in the beverage maker above the carafe, which can hold a filter and coffee grounds, through which water is fed to produce a filtered coffee beverage.

For safety reasons, for a beverage maker to be suitable for use in a vehicle galley, it is required to have a latching mechanism to hold any removable components in place during transit, for example the coffee carafe and brew cup. Typically, a manual latching mechanism is implemented, which can be manually manipulated to hold any movable components in place when required, and equally the latching mechanism should be movable so as to allow any removable elements to be accessed when required. It is also desirable to prevent any contents of a beverage container from spilling and causing additional hazards.

### Summary

According to a first aspect of the present disclosure there is provided a beverage maker for a vehicle galley compartment, the beverage maker comprising:
a housing comprising a dispensing region configured to receive a beverage container in a beverage receiving position;
a latching mechanism configured to move relative to the housing between a first position and a second position;
wherein, when in the first position the latching mechanism is configured to retain the beverage container in the beverage receiving position, and when in the second position the latching mechanism is configured to allow the beverage container to be placed in or removed from the beverage receiving position; and
an electrical actuator, configured to control movement of the latching mechanism relative to the housing from the second position to the first position.

By the movement of the latching mechanism being controlled by an electrical actuator, the latching mechanism no longer has to be manually closed when required, instead closing of the latching mechanism may be performed automatically. The beverage maker according to the present disclosure therefore provides a quick and convenient manner in which to make the beverage maker safe during transit.

In the beverage maker of the present disclosure, a beverage container can be inserted into the housing, and a beverage can be dispensed into the beverage container. In some examples, the beverage maker may comprise a beverage container configured to be received in the beverage receiving position of the housing. It will be appreciated by the skilled person that various types of beverage makers which dispense a beverage into a beverage container can implement the examples of the present disclosure. The beverage container may be of any suitable shape or size for the specific type of beverage maker. In some examples the beverage maker is a cold beverage maker. In some other examples the beverage maker is a hot beverage maker. The hot beverage maker may be a coffee maker, or a tea maker, or a hot chocolate maker, or any other known hot beverage maker. In some examples the hot beverage maker may be a filter coffee machine, in some examples the hot beverage maker is a coffee machine which uses disposable pods.

It will be appreciated that by "movement from" one position to another position it is meant that the movement of the latching mechanism is at least from the listed positions (i.e. at least unidirectional), however when referred to as to "move between" the first and second positions, it is meant both from the first to the second position, and from the second to the first (i.e. bidirectional), unless explicitly stated otherwise. In some examples the electrical actuator may be operable to only control movement of the latching mechanism from the second position to the first position (i.e. to close the latching mechanism), and the latching mechanism may be configured to be manually returned from the first position to the second position (i.e. to close the latching mechanism). In some other examples the electrical actuator may be further configured to control movement of the latching mechanism from the first position to the second position, making the electrical actuator controllable to move the latching mechanism in both directions, (i.e. the electrical actuator is configured to control movement of the latching mechanism between the first position and the second position). In some examples the latching mechanism may be both manually operable to move between the first and second positions, and be movable by control of the electrical actuator. In some examples the latching mechanism is configured to be only moved manually from the first position to the second position (i.e. to open the latching mechanism), and only configured to move by control of the electrical actuator from the second position to the first position (i.e. to close the latching mechanism).

The latching mechanism of the present disclosure is disposed relative to the housing so as to retain the beverage container in place within the housing when closed (i.e. when in the first position). The latching mechanism can then be opened (i.e. moved to the second position) to allow the beverage container to be removed or inserted as required. The electrical actuator may be fixed to the housing and to the latching mechanism to allow the latching mechanism to move relative to the housing. In some examples the electrical actuator may be configured to control movement of the latching mechanism directly (e.g. via a motor). In some examples the electrical actuator may be configured to indirectly control the latching mechanism (e.g. by releasing a movable component from a solenoid, or repelling a movable component from a solenoid). In some examples the electrical actuator may be configured to hold the latching mechanism in the first position and/or second position. In some examples the electrical actuator may be a linear actuator, in some other examples, the electrical actuator may be a rotary actuator. In some examples the electrical actuator may be configured as a bi-stable system. In some examples the electrical actuator may comprise a solenoid configured control movement of the latching mechanism. The solenoid may be configured to hold the latching mechanism in the second position, and dependent upon control of the solenoid, the latching mechanism may be configured to move to the first position. For example, the solenoid may be configured to hold the latching mechanism in the second position when energised, and be deenergized to cause the latching mechanism to move to the first position. The movement may be caused directly by operation of the solenoid, or indirectly via operation of the solenoid. In some examples the solenoid may be configured to move the latching mechanism between the first and second positions.

In some examples the electrical actuator may comprise a biasing member configured to bias the latching mechanism into the first position. In some examples the biasing member may be a compression spring, in some examples the biasing member may be a torsion spring. The electrical actuator may be configured such that it is controlled to enable the bias of the biasing member to move the latching mechanism from the second position to the first position (e.g. by turning off a solenoid). In this manner the beverage maker can be configured with a failsafe mechanism, such that when power is cut from the electrical actuator, the latching mechanism will automatically move to the first position (i.e. close) to safely retain a beverage container in place in the housing. It will be appreciated by the skilled person that the combined use of a solenoid and a biasing member may provide a simple failsafe mechanism for actuating the latching mechanism.

The skilled person will appreciate that whilst in some beverage makers the only removable component is a beverage container, in other beverage makers there may be additional removable parts, for example a filter coffee machine will have a part which is removable for inserting coffee grounds in a filter. Generally, such removable parts are located above the beverage container such that liquid passes through them before being dispensed into the beverage container. All such parts are referred to herein as a brew cup, although this is not meant to limit the component to that for a coffee machine. In some examples therefore, the beverage maker may further comprise a brew cup, and the housing may be configured to receive the brew cup in a brewing position above the dispensing region, i.e. so as to receive the beverage container in the beverage receiving position arranged below the brewing position. The brew cup is understood to be required for the making of beverages in some specific types of beverage machine. The brew cup may be held in the brewing position by an additional locking mechanism, the additional locking mechanism may be intrinsic to the brew cup and the housing. In some other examples the latching mechanism may be further configured to retain the brew cup in the brewing position when in the first position.

In some examples, the electrical actuator may be further configured to hold the latching mechanism in a third position; in the third position the latching mechanism is configured to retain the brew cup in the brewing position and allow a beverage container to be placed in or removed from the beverage receiving position. In some examples the electrical actuator is configured to move the latching mechanism into the third position. Moving to the third position may include moving from the first position to the third position and/or moving from the second position to the third position.

In some examples the beverage maker may comprise a dispensing head configured to dispense a beverage into the beverage container. The housing may be configured such that the dispensing head is immediately above the dispensing region. In some examples the housing may be configured to receive the brew cup above the dispensing head. The beverage maker may therefore be operated such that liquid passes though the brew cup and then the dispensing head to be dispensed into the beverage container as a beverage.

In some examples the latching mechanism may comprise the dispensing head. The latching mechanism may be configured such that when in the first position, the dispensing head is in engagement with a top opening of the beverage container. The latching mechanism can therefore retain the beverage container in the beverage receiving position by means of the dispensing head. When the latching mechanism is in the second position the dispensing head can therefore moved so as to not be in engagement with the top opening of the beverage container, so as to allow the beverage container to be inserted and removed without hinderance. When the dispensing head is lowered into the top opening of the beverage container the beverage being dispensed can then flow directly into the beverage container without spilling.

In some examples the dispensing head is the only element of the latching mechanism which retains the beverage container in place. In some other examples, the latching mechanism may comprise a separate component configured to retain the beverage container in the beverage receiving position, for example a handle of the latching mechanism, or another component which independently blocks or holds the beverage container in place. In some other examples the dispensing head forms an additional restrain on the beverage container, with another component. In some examples, the dispensing head being brought into contact with the top of the beverage container may create a water-tight seal, however in some other examples the dispensing head does not create a water-tight seal with the beverage container. The lowering of the dispensing head into the top opening of the beverage container therefore increases the safety of the system by preventing spillages, which are especially dangerous if the beverage maker is a hot beverage maker, and by constraining the beverage container in place. The beverage container may be specifically shaped to fit with the dispensing head so that the dispensing head can be used to retain the beverage container in place. It may be convenient therefore for the dispensing head to have multiple functions including dispensing a beverage, preventing spillages, and retaining the beverage container in the beverage receiving position.

The skilled person will appreciate that there are a number of ways in which the electrical actuator can be controllable in the various manners as discussed above. In some examples the beverage maker may further comprise a sensing apparatus. In some examples the sensing apparatus may be configured to detect if and/or when the beverage container is in the beverage receiving position. In some examples the sensing apparatus is configured to detect the current position of the latching mechanism. In some examples the sensing apparatus may be configured to directly control operation of the electrical actuator. For example, the sensing apparatus may comprise a micro-switch configured to directly control the electrical actuator. In some examples the sensing apparatus may comprise a weight sensor. In some examples the sensing apparatus may comprise an optical sensor. In some examples the sensing apparatus may consist of a single sensor, however in other example the sensing apparatus may comprise a plurality of sensors. In some examples a first sensor may be configured to detect when the beverage container is placed into the beverage receiving position and a second sensor may be configured to confirm that the beverage container is in the beverage receiving position. In some examples the first sensor is a weight sensor, and the second sensor is an optical sensor. It will be appreciated by the skilled person that a number of different types of sensors may be suitable for detecting, if/when the beverage container is placed in the beverage receiving position.

In some examples the beverage maker may comprise a control unit configured to control operation of the beverage maker. By control operation of the beverage maker it is meant that the control unit controls the making and/or dispensing of a beverage into the beverage container. Whilst in some examples the electrical actuator may be configured to be directly controlled by, for example, the sensing apparatus, in other examples a control unit may be configured to instruct the operation of the electrical actuator. The control unit instructing operation of the electrical actuator may be a local controller to the beverage maker (e.g. the same control unit as controls the preparation of a beverage, or a separate internal control unit), or in some other examples the control unit may be remote from the beverage maker (e.g. a control unit in the vehicle galley which controls a plurality of different GAIN devices, or a control unit central to the vehicle itself). In some examples the control unit may be configured to operate the electrical actuator dependent on a signal from the sensing apparatus. In some examples the sensing apparatus may be configured to send at least one signal to the control unit, in some examples the sensing apparatus may be communicatively linked to the control unit. In some examples the control unit may be configured to control the electrical actuator dependent upon the signal received from the sensing apparatus. In some examples the control unit is configured to operate the electrical actuator when the sensing apparatus detects and optionally confirms if and/or when the beverage container is placed in the beverage receiving position.

In some examples the sensing apparatus may be configured to detect a status of the beverage container in the beverage receiving position. The sensing apparatus may be configured to send a signal to the control unit representing the status of the beverage container. The status of the beverage container may include at least one of: if the beverage container is present in the beverage receiving position, or not present in the beverage receiving position; the temperature of the beverage container and/or its contents; the current capacity of the beverage container; if the beverage container is full; and/or if the beverage container is empty. In some examples the sensing apparatus may comprise a temperature sensor. In some examples the sensing apparatus may be further configured to detect a status of the brew cup. The sensing apparatus may be configured to send a signal to the control unit representing the status of the brew cup. The status of the brew cup may be at least one of the following: whether the brew cup is in the brewing position; whether the brew cup has been filled (e.g. if there are coffee grounds, hot chocolate powder, tea leaves etc in the brew cup).

In some examples the sensing apparatus may be further configured to detect the position of the latching mechanism, and the signal sent to the control unit may relate to the status of the latching mechanism. In some examples, the control unit may be configured to monitor the status of the latching mechanism. The status of the latching mechanism may include which position the latching mechanism is currently in (i.e. the first position, the second position and optionally the third position). The status of the latching mechanism may also include an indication as to whether the latching mechanism is malfunctioning. The status of the latching mechanism may be known directly from the electrical actuator (e.g. via electronic feedback), and/or may be detected via the sensing apparatus. The sensing apparatus may include a sensor positioned to detect the actual position of the latching mechanism, which may be checked against feedback provided from the electrical actuator and be used to detect a fault in the electrical actuator. The status of the latching mechanism may be used by the control unit to determine whether to make/dispense a beverage, and/or operate the electrical actuator.

In some examples the beverage maker may comprise a display unit. In some examples the display unit may be configured to display the status of the latching mechanism. In some examples the display unit may be configured to display the status of the beverage maker and/or the beverage container. In some examples the display unit may be a lamp or LED display directly controlled by the sensing apparatus. In some examples the display unit may be controlled via the control unit, as will be discussed in more details below.

As discussed above, operation of the electrical actuator may be linked to the sensing apparatus either indirectly via the control unit or directly. In some examples the electrical actuator is configured to control movement of the latching mechanism to the first position when the sensing apparatus detects that the beverage container has been placed in the beverage receiving position. In this way the beverage maker can automatically close the latching mechanism when the beverage container is placed into the housing, increasing the safety of the system. In some examples the control unit may be configured to operate the electrical actuator such that the latching mechanism moves to the first position dependant on the status of the beverage container. In some examples the control unit is configured to move the latching mechanism to the first position if an empty beverage container is placed in the beverage brewing position. In some examples the control unit may be configured to only allow the latching mechanism to move to the first position when the beverage container is in the beverage receiving position and/or the brew cup in the brewing position. In some other examples the beverage maker may be configured such that the latching mechanism can be moved to the first position even if the beverage container is not in the beverage receiving position, and/or the brew cup is not in the brewing position.

The beverage maker may be further configured to dispense a beverage dependent on the position of the latching mechanism. In some examples the beverage maker may be configured to only allow dispensing of a beverage when the beverage container is in the beverage receiving position, and when the latching mechanism is in the first position. In some examples the control unit may be configured to only operate the beverage maker for dispensing a beverage when the beverage container is empty. In some examples, the control unit may be configured to operate the beverage maker immediately after the latching mechanism has moved to the first position. The skilled person will appreciate that in this manner the operator of the beverage machine can save time, as the process for both latching and making the beverage can be automated.

The skilled person will appreciate that once a beverage has been dispensed into the beverage container the latching mechanism will be required to move to allow the beverage container to be removed. In some examples, the control unit is configured to move the latching mechanism from the first position to the second position or the third position when the beverage maker has completed dispensing of the beverage.

Whilst the beverage maker may be configured with a single operating setting, in some examples, it may be useful to a user to have a choice over how the beverage maker functions. Therefore, in some examples the beverage maker may comprise a user interface configured to provide instructions to the control unit. In some examples, the user interface may be integrated with the display unit. In some examples, the control unit may be configured to operate the electrical actuator to move the latching mechanism from the first position to the second position on the basis of a signal received from the user interface. In some examples, the user interface may be configured to instruct the control unit to switch between an automated mode and a manual mode.

In some examples the manual mode may include indicating via the user interface to the beverage maker that the latching mechanism should be moved between one position and another position (i.e. the first, second and optionally the third positions); and/or that the beverage maker should be operated to dispense a beverage. In some examples when in the manual mode the latching mechanism automatically moves to the first position upon detection of the beverage container (and, when applicable, upon detection of the brew cup). In this way, the production of a beverage can be manually instructed, but the closing of the latching mechanism can still be automated. In some examples, only when in the automated mode, when the sensing apparatus has detected that the beverage container is in the beverage making position (and when applicable, optionally the brew cup in the brewing position), the control unit may be configured to move the latching mechanism to the first position. In some examples, when in the automated mode, the control unit can decide when to operate the beverage maker to dispense a beverage on the basis of position of the latching mechanism and/or the status of the beverage container, and optionally the status of the brew cup. In some examples, when in the automated mode, when a beverage has been dispensed, the control unit may be configured to operate the electrical actuator to move the latching mechanism from the first position to the second position or the third position. In some examples, when in the automatic mode, the movement of the latching mechanism from the first position to the second position or third position may be initiated by an input to the user interface, or by manually moving the latching mechanism.

Whilst the beverage maker disclosed herein may be suitable for any type of vehicle galley, including but not limited to a motorhome, a train, a boat or an aircraft, the design may be particularly advantageous in commercial transport solutions. In commercial transport solutions quick and efficient galley components are useful to save crew time, and to ensure the safety of passengers. In some examples, the beverage maker is configured for installation in an aircraft galley compartment (i.e. as an aircraft galley insert). It will be appreciated that aircraft galleys in particular have specific requirements for galley inserts, which mean that they are installable in a specific sized compartment in the galley, and installable by using installations points specific to aircraft galleys (e.g. specific screw locations, power connections and water connections). The specific details of aircraft galleys can vary between those designed to different standards, but are known to those in the art, so are not disclosed herein.

The skilled person will appreciate that in an aircraft there are particular scenarios where it is important that all items in the galley are safely secured to prevent injuries, for example during take-off, landing, turbulence or during a crash scenario. In such scenarios having a beverage maker which can automatically secure removable elements in place will be advantageous over machines where a member of crew must manually confirm elements are retained in place.

The beverage maker may be controlled via an internal control unit communicatively connected to an external controller. The skilled person will appreciate that there are a number of manners in which a communicative link could be implemented, both as wired and wireless connections (e.g. Bluetooth, WiFi, or a Local Area Network). The user interface may be implemented on the housing of the beverage maker, and/or may be via a remote terminal, (e.g. a dedicated remote terminal, a mobile phone, a tablet computer, or a user interface elsewhere in the galley or vehicle). The remote terminal may implement both the user interface and the display unit. The user interface may be implemented by a software application on a personal mobile terminal. In some examples a single user interface may be suitable for monitoring a plurality of beverage makers within an aircraft.

In some examples the control unit may be configured to send data corresponding to the status of the beverage maker to the remote terminal (e.g. via an application on a personal mobile device). Status of the beverage maker may include at least one of: status of the latching mechanism; status of the beverage container; and/or status of the brew cup. It will be appreciated that the status of the beverage maker may be determined via the sensing apparatus. In some examples the status of the latching mechanism can be directly monitored by the control unit from information from the electrical actuator. A user (e.g. a crew member) can have real-time verification of the status of the beverage maker, including whether the latching mechanism is safely deployed in the first position.

In some examples, the control unit may be configured to control the electrical actuator to move the latching mechanism to the first position on the basis of a predetermined condition. The predetermined condition may depend on the vehicle type. In the example of an aircraft the predetermined condition may be at least one of: an indication of turbulence; an indication of a potential crash condition; an indication of a take-off condition; an indication of a landing condition; and/or an indication that seatbelts should be used. The control unit may receive data relating to the predetermined condition from an external source, for example a central control of the aircraft, or a remote terminal. It will be appreciated that by linking the operation of the latching mechanism to any of these predetermined conditions, the beverage maker can be put into a safe status automatically, reducing the number of tasks required by a user member to make the galley safe, hence increasing the overall safety of the aircraft.

According to a second aspect of the present disclosure there is provided an aircraft galley insert comprising the beverage maker as described above.

According to a third aspect of the present disclosure, there is provided a method for operating a beverage maker for a vehicle galley. The beverage maker comprising a housing comprising a dispensing region configured to receive a beverage container in a beverage receiving position, and a latching mechanism. The method comprising:
detecting the beverage container in the beverage receiving position;
wherein dependent on the beverage container being detected in the beverage receiving position, the method further comprises:
   automatically moving the latching mechanism relative to the housing from a second position to a first position; and
   dispensing a beverage into the beverage container;
   wherein, when in the first position the latching mechanism is configured to retain the beverage container in the beverage receiving position, and when in the second position the latching mechanism is configured to allow the beverage container to be placed in or removed from the beverage receiving position.

The method may include detecting that a brew cup is in a brewing position. In some examples, the automatic moving of the latching mechanism may be dependent on the detection of the brew cup. In some examples the automatic moving of the latching mechanism may be dependent on a signal from a user interface and/or an external source relating to a predetermined condition.

It will be appreciated that the disclosure above relating to the beverage maker may be equally applicable to the method of operating the beverage maker, and vice versa.

### Detailed description

Certain preferred examples of this disclosure will now be described, by way of example only, with reference to the accompanying drawings, in which:
FIG. 1 shows a perspective view of a beverage maker according to an example of the present disclosure;
FIG. 2A and 2B show schematic side views of the latching mechanism with electrical actuator in open and closed position according to an example;
FIG. 3 shows another example of a beverage maker as a galley insert installed in a vehicle galley;
FIG. 4 shows a flow diagram of a method of operating a beverage maker according to an example.

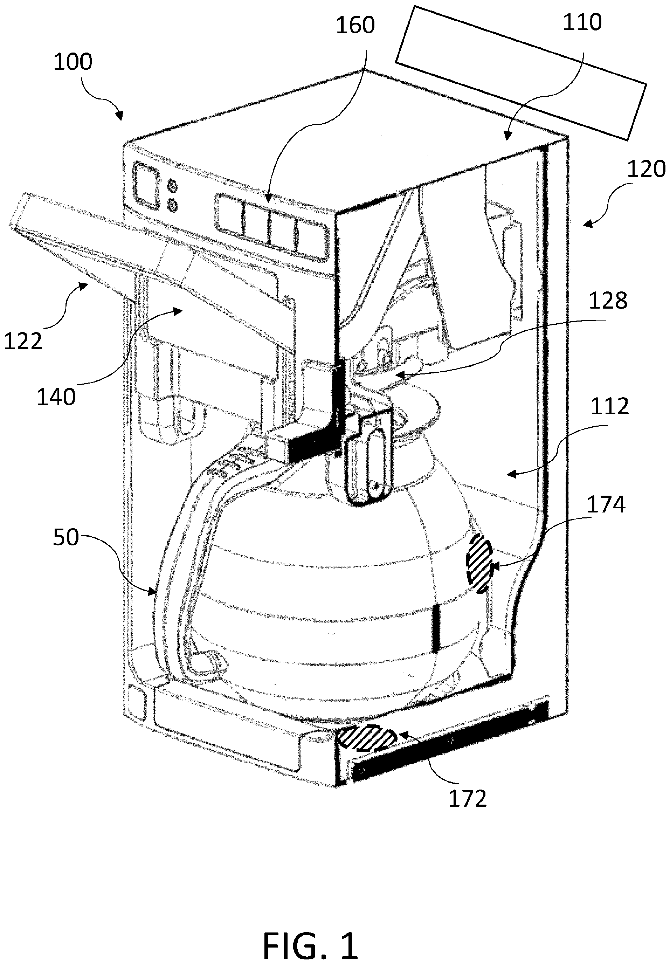

FIG. 1 shows a beverage maker 100. The beverage maker has a housing 110 with dispensing region 112, latching mechanism 120 including a latching handle 122 and dispensing head 128, brew cup 140, user interface 160 and two sensors 172, 174. The housing 110 contains various components to make and dispense a beverage which will be known to those skilled in the art in the upper portion of the housing 110, including the brew cup 140 and as part of the latching mechanism 120 the dispensing head 128. Below the dispensing head 128 is the dispensing region 112 in which a beverage container (in this example a carafe 50) is placed during use. When in the dispensing region 112 the carafe 50 is in the beverage receiving position. In the example of a coffee maker, the brew cup 140 can contain a filter and coffee grounds, and hot water is filtered through these coffee grounds out through the dispensing head 128 into the carafe 50. The carafe 50 can be retained in place by using the latching mechanism 120.

The beverage maker 100 can be operated via a user interface 160, shown in this example at the top and on the front of the housing 110. The user interface 160 is used to control operation of the beverage maker 100 including the making and dispensing of a beverage. Whilst in this example the user interface 160 is shown on the housing 110 in some other examples the user interface may be remote to the beverage maker 100. The user interface 160 may also be connected to a control unit (not shown) which can control the operation of the beverage maker 100. The user interface 160 may in some examples be usable to instruct the movement of the latching mechanism 120 between open and closed positions, as will be described in more detail below.

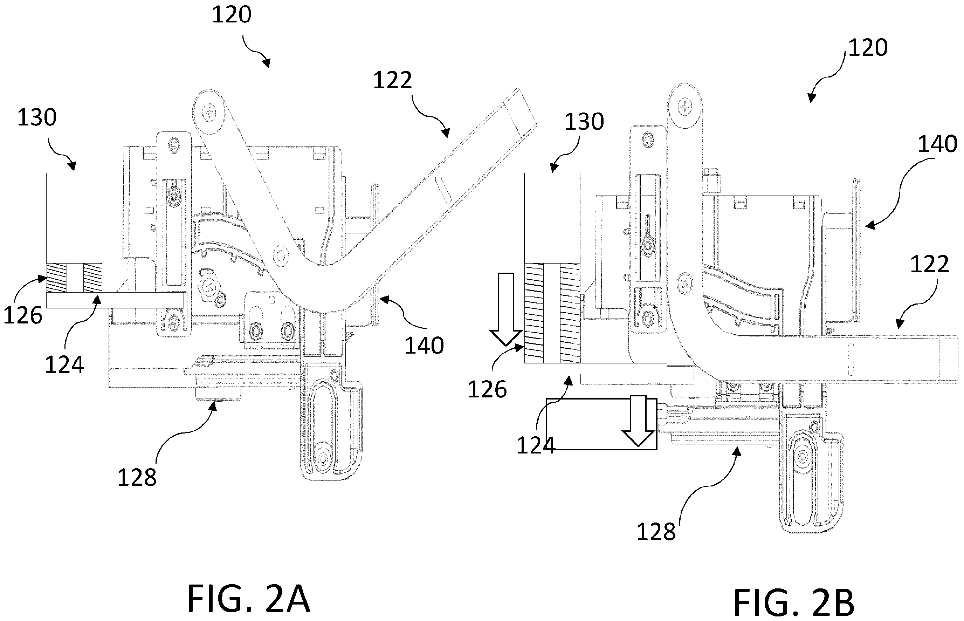

In the example of FIG. 1 the latching mechanism 120 is shown in the open position (i.e. a second position). Much of the latching mechanism 120 is internal to the beverage machine 100 so not visible in this figure, however the latching mechanism 120 may be moved between the open and closed (i.e. first position) with the latching handle 122. The latching mechanism 120 in this example is operable via the latching handle 122 (i.e. manually) or via an electrical actuator (not shown) internal to the beverage maker 100. The workings of the latching mechanism 120 are described in more detail below, with reference to FIGs. 2A and 2B. The electrical actuator may be instructed via the controller (and in turn may be instructed via the user interface 160) to control the movement of the latching mechanism 120.

In this example, the beverage maker 100 also has a sensing apparatus with two sensors 172, 174. The first sensor 172 is disposed below the dispensing region 112 and the second sensor 174 is disposed behind the dispensing region 112. The sensing apparatus is configured to sense if and/or when the carafe 50 has been placed in the beverage dispensing position as shown. The first sensor 172 may be a weight sensor configured to detect the weight of the carafe 50, and may be able to distinguish between the carafe 50 when full and when empty. When the carafe 50 is placed into the beverage receiving position in the dispensing region 112, the first sensor 172 can send a signal to the control unit, and the control unit can in turn instruct the electrical actuator to move the latching mechanism 120 into the closed position. In some examples, the second sensor 174 also detects when the carafe 50 is in the correct position, and makes a further indication to the control unit. In some examples, only when both the first sensor 172, and the second sensor 174 indicate that the carafe 50 is in the correct beverage receiving position will the control unit instruct the electrical actuator to move the latching mechanism 120. The second sensor 174 may be an optical sensor.

It will be appreciated by the skilled person, that whilst the example of weight and optical sensors have been used in this example, other types of sensors may also be used. Additionally, whilst in this example the sensors send information to a control unit, in some other examples the sensors may be directly connected to the electrical actuator, so that when a sensor is triggered the electrical actuator automatically lowers the latching mechanism 120 into the closed position. For example, the sensing apparatus may be a micro-switch placed in the housing 110 to be triggered when the carafe 50 is placed into the beverage dispensing position, which directly triggers the electrical actuator to move the latching mechanism 120.

The user interface 160 may be operable to switch the beverage maker 100 between various modes of operation, for example a manual mode and an automatic mode. In the automatic mode the beverage maker 100 may automatically close the latching mechanism 120 when the carafe 50 is in the beverage receiving position in the dispensing region 112, and if detected to be empty, may automatically begin dispending a beverage into the carafe 50. In a manual mode any of the operational steps may require manual activation, or confirmation before proceeding, e.g. closing of the latch, or dispensing a beverage.

FIGs. 2A and 2B show two side views of the latching mechanism 120, in FIG. 2A the latching mechanism 120 is shown in the open position, and in FIG. 2B the latching mechanism 120 is shown in the closed position. FIGs. 2A and 2B also show electrical actuator 130, brew cup 140 and dispensing head 128. Features of the housing, and the carafe are omitted from these figures to clearly show the latching mechanism 120. The latching mechanism 120 has a latching handle 122 as described above with reference to FIG. 1, and the dispensing head 128 shown in an upper position in FIG. 2A and lower position in FIG. 2B. In this example the electrical actuator is a solenoid 130 which is connected to the latching mechanism 120 via a spring 126 (i.e. a biasing element) and a linkage 124.

When the latching mechanism 120 is in the open position as shown in FIG. 2A, the solenoid 130 is activated to hold the linkage 124 against the bias of the spring 126 and keep the latching mechanism 120 in the open position. As shown in FIG. 1 the carafe 50 can be removed from the beverage receiving position in the housing whilst the latching mechanism 120 is in this position because the dispensing head 128 is raised away from the neck of the carafe 50. The solenoid 130, spring 126 and linkage 124 in this example are shown as separate components that actuate the latching mechanism 120, but it will be appreciated that components of the electrical actuator may be integral to the latching mechanism 120.

To close the latching mechanism 120, in this example the solenoid 130 is deactivated, releasing the linkage 124 from the position shown in FIG. 2A. The bias of the spring 126 then pushes the linkage 124 downwards (as represented by the arrow), moving the latching mechanism 120 into the closed position as shown in FIG. 2B. With this movement, the latching handle 122 is moved downwards into the closed position as shown. As part of the movement of the latching mechanism 120 the dispensing head 128 is moved downwards (as shown by the arrow), such that when a carafe is in place in the dispensing region, the dispensing head 128 will sit inside the carafe. When the latching mechanism 120 is closed, the beverage container (e.g. carafe) is retained in place by the dispensing head 128. The action of moving the latching mechanism 120 additionally locks the brew cup 140 in place. This mechanism is therefore a failsafe mechanism, which will automatically move the latching mechanism 120 into the closed position if power is lost to the beverage maker, increasing the safety in case of an emergency situation.

In the closed position the dispensing head 128 is received inside the top of a carafe with the shape of the top of the carafe configured to fit against the dispensing head 128. The shapes of both the carafe and the dispensing head 128 can be configured to have matching configurations to ensure the dispensing head 128 can retain the carafe in place. In addition, the action of the latching mechanism 128 lowers a dispensing mechanism (not shown) into engagement with the brew cup 140 to lock it in place, and to then allow a beverage to be dispensed through the brew cup 140, into the dispensing head 128 and into the carafe. In this way the brew cup 140 is stationary relative to the movement of the latching mechanism 120 including the movement of the dispensing head 128 as shown in FIGs. 2A and 2B.

It will be appreciated that the example of FIGs. 2A and 2B have the dispensing head 128 as the retaining mechanism, however in some other examples, the beverage container may be retained in place with by another physical means, e.g. by the latching handle 122.

To move the latching mechanism 120 back from the closed position of FIG. 2B to the open position of FIG. 2A the solenoid 130 is turned on, so that the linkage 124 is pulled upwards against the bias of the spring 126. The bias of the spring 126 is therefore sufficient to move the latching mechanism 120 into the closed position, whilst being easily overcome by an upward force of the activated solenoid 130. In the event of a loss of power to the solenoid 130, the latching mechanism 120 can be manually operated by using the latching handle 122. The biasing force of the spring 126 is therefore configured so it can be overcome by an appropriate manual force applied to the latching handle 122.

It will be appreciated that whilst in this example manual movement of the latching mechanism 120 is only possible when the solenoid 130 is not powered, in other examples an electrical actuator may be configured so that manual movement of the latching mechanism 120 even when the electrical actuator is powered.

In some examples, the solenoid 130 is strong enough to hold the latching mechanism 120 in place, but the force of the solenoid 130 is also easily overcome if a manual force is to be exerted on the latching handle 122, so that any manual action of the latching handle 122 will override the electrical control of the latching mechanism 120. In such examples, the physical movement of the latching mechanism 120 may also be used to turn off the solenoid 130, so that the closing of the latching mechanism 120 is aided by the biasing force of the spring 126.

In some other examples, the electrical actuator may not be a failsafe system, and the linkage 124 may be held in the open position of FIG 2A without the requirement for the solenoid 130 to be activated, for example, if the linkage 124 is magnetically attracted to the deactivated solenoid 130, with a force greater than the bias of the spring 130.

The solenoid 130 may then be controlled to produce a repelling force on the linkage 124 to move the latching mechanism 120 into the closed position, together with the biasing of the spring 126.

In some examples, manual operation of the latching handle 122 is required to open the latching mechanism 120, however in some other examples, the solenoid 130 may be controllable to return the latching mechanism 120 to the open state. For example, the solenoid 130 may be operable to produce a magnetic force on the linkage 124 which is greater than the biasing force of the spring 126, so the control of the solenoid 130 can pull the linkage 124 upwards and open the latching mechanism 120.

It will be appreciated by those skilled in the art that whilst the example shown in FIGs 2A and 2B utilizes a solenoid 130 as a linear actuator to move the latching mechanism 120, other electrical actuators will also be suitable, for example a rotary actuator and/or one which uses a motor. The electrical actuator may be configured to be bi-stable so as to ensure the latching mechanism 120 stays in the open or closed position as required. The electrical actuator may also be electronically controlled via a control unit.

The electrical actuator may be configured to relay information about the current position of the latching mechanism 120 to the control unit, e.g. via electronic control and feedback. The sensing apparatus, previously discussed with reference to FIG. 1, may also include sensors in the latching mechanism 120 and/or electrical actuator to monitor the operation of the electrical actuator and the position of the latching mechanism 120. The control unit may be implemented in a variety of ways as will be appreciated by those skilled in the art, including a controller internal, or external to the beverage maker, or a combination of an internal control unit and an external control unit.

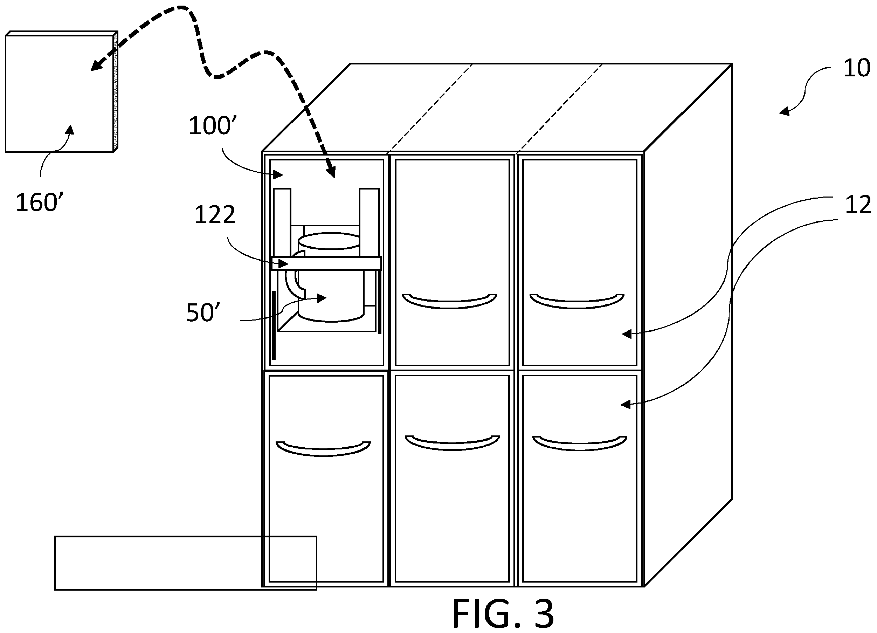

FIG. 3 shows an example vehicle galley 10 with compartments 12, beverage maker 100' being used with a beverage container 50', and remote terminal 160'. In one of the galley compartments 12 the beverage maker 100' is installed as a galley insert. It will be appreciated by the skilled person that different vehicle galleys have different requirements for galley inserts, for example specific electrical connections, water connections and/or installation points. The beverage maker 100' therefore is specifically designed to be installed in a specific type of vehicle galley. In this example the latching mechanism is in the closed position with the latching handle 122 shown in the down position so the beverage container 50' is retained in place by the latching mechanism as described above with reference to FIGs. 2A and 2B. It will be appreciated by the skilled person, that whilst a different beverage maker 100' is shown here, the beverage maker 100 shown in FIGs 1 and 2, could also have been installed in this manner, and operable as described below.

In the example of FIG. 3, there is no user interface provided on the beverage maker 100', instead a remote terminal 160' is provided, which is both a user interface and a display device (e.g. a tablet computer). The remote terminal 160' is communicatively linked to the beverage maker 100'. The communicative link is represented here by a dashed two-way line, and can be either a wired or wireless link as will be well known to those in the art, for example via a Wi-Fi connection. The remote terminal 160' can be used by an operator to instruct operation of the beverage maker 100', for example to dispense a beverage, or to move the latching mechanism. The remote terminal 160' may also be used to monitor the current status of the beverage maker 100'. The status may include the current latching position, whether the carafe 50' is in the beverage receiving position, whether a beverage has been dispensed into the carafe 50', or whether there are any errors with the beverage maker 50'.

In the specific example of an aircraft, the remote terminal 160' may be a crew terminal at which an operator can monitor a plurality of beverage makers 100' installed in different galley compartments 12 in the aircraft. The remote terminal 160' may allow a crew member to remotely instruct all beverage makers 100' to close their latching mechanisms, for example in a take-off, landing or turbulence scenario. In some examples, the control unit for the beverage maker(s) 100' may be linked to a central computer of the vehicle (e.g. aircraft), which may send a signal to close all latching mechanisms in the event of an emergency situation. The remote terminal 160' may be a dedicated device, or may be implemented as software or an application on another device. The beverage maker monitoring may be implemented with other connected galley insert devices, for example chillers and ovens.

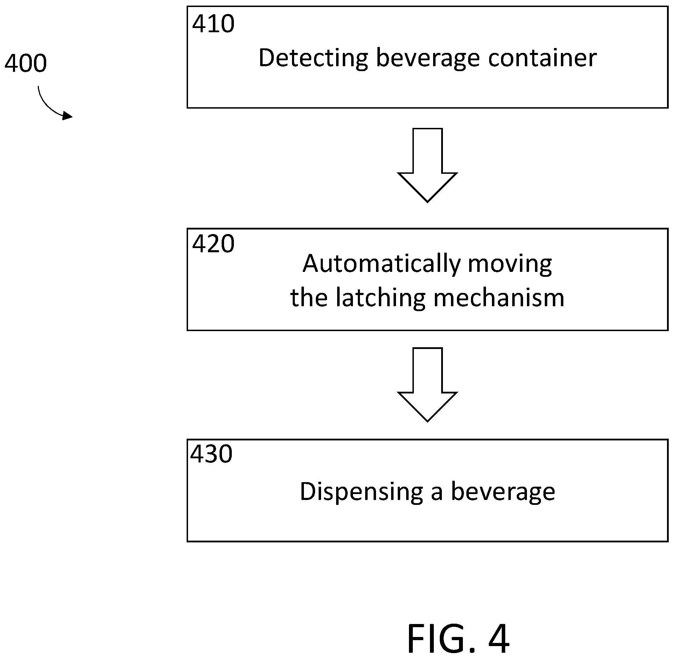

FIG. 4 shows a flow diagram of a method 400 of operating a beverage maker, including those of FIGs 1 -3. At step 410 the beverage maker detects that a beverage container has been placed in the beverage receiving position as described above. Once a beverage container is detected in place, at step 420, the latching mechanism is automatically moved from the second (open) position to the first (closed) position. At step 430 the beverage maker the dispenses a beverage into the beverage container. It will be appreciated that the method may further include a step of automatically moving the latching mechanism from the closed position to the open position. In addition, while during regular use the closing of the latching mechanism depends on the presence of the beverage container in the beverage receiving position, as indicated above, the latching mechanism may be remotely operated to move to the closed position even if the beverage container is not in the correct position.

Other features of the beverage makers described above with reference to FIGs. 1-3 may be equally applicable to the disclosed method.

The beverage maker of the present disclosure provides for electrical control of the latching mechanism, which saves operator time. It also provides for real time verification and remote instruction of the latching mechanism position, increasing the safety of the beverage maker.

It will be appreciated by those skilled in the art that the disclosure has been illustrated by describing one or more specific aspects thereof, but is not limited to these aspects; many variations and modifications are possible, within the scope of the accompanying claims.

## Claims

1. A beverage maker for a vehicle galley compartment, the beverage maker comprising:
a housing comprising a dispensing region configured to receive a beverage container in a beverage receiving position;
a latching mechanism configured to move relative to the housing between a first position and a second position;
wherein, when in the first position the latching mechanism is configured to retain the beverage container in the beverage receiving position, and when in the second position the latching mechanism is configured to allow the beverage container to be placed in or removed from the beverage receiving position; and
an electrical actuator configured to control movement of the latching mechanism relative to the housing from the second position to the first position.

2. A beverage maker according to claim 1, wherein the electrical actuator is configured to control movement of the latching mechanism relative to the housing between the first position and the second position.

3. A beverage maker according to claim 1 or 2, wherein the electrical actuator is a linear actuator comprising a solenoid configured to control the movement of the latching mechanism.

4. A beverage maker according to any preceding claim, wherein the latching mechanism comprises a biasing member configured to bias the latching mechanism into the first position.

5. A beverage maker according to any preceding claim, further comprising a control unit, wherein the control unit is configured to control operation of the beverage maker, and to control the operation of the electrical actuator.

6. A beverage maker according to any preceding claim, further comprising a sensing apparatus configured to detect if and/or when the beverage container is in the beverage receiving position.

7. A beverage maker according to claim 6, wherein sensing apparatus is further configured to detect a status of the latching mechanism.

8. A beverage maker according to claim 7, wherein the beverage maker further comprises a display unit; and wherein the display unit is configured to display the status of the latching mechanism.

9. A beverage maker according to claim 6, 7 or 8, wherein the sensing apparatus comprises a weight sensor, and wherein the weight sensor is configured to detect if the beverage container is in the beverage receiving position; and optionally
wherein the sensing apparatus further comprises an optical sensor, and wherein the optical sensor is configured confirm that the beverage container is in the beverage receiving position.

10. A beverage maker according to any of claims 6 to 9, when dependent on claim 5, wherein the sensing apparatus is configured to send at least one signal to the control unit, and wherein control unit is configured to control operation of the electrical actuator dependent on the signal(s) received from the sensing apparatus.

11. A beverage maker according to of claims 6 to 10 when dependent on claim 5, wherein the beverage maker further comprises a user interface, and wherein the user interface is configured to instruct the control unit to switch between an automated mode and a manual mode;
wherein when in the manual mode the control unit is configured to receive instruction from the user interface to operate the electrical actuator; and
wherein when in the automated mode, when the sensing apparatus has detected that the beverage container is in the beverage receiving position, the control unit is configured to instruct the electrical actuator to move the latching mechanism from the first position to the second position.

12. A beverage maker according to any preceding claim, further comprising a brew cup, wherein the housing is configured to receive the brew cup in a brewing position above the dispensing region, so as to receive the beverage container in the beverage receiving position arranged below the brewing position, and
wherein the latching mechanism is further configured to retain the brew cup in the brewing position when in the first position.

13. A beverage maker according to any preceding claim, wherein the latching mechanism further comprises a dispensing head configured to dispense a beverage into the beverage container;
wherein the housing is further configured such that the dispensing head is immediately above the dispensing region;
wherein when the latching mechanism is in the first position, the dispensing head is in engagement with a top opening of the beverage container; and
wherein when the latching mechanism is in the second position the dispensing head is not in engagement with a top opening of the beverage container.

14. A beverage maker according to any preceding claim, wherein the beverage maker is configured for installation in an aircraft galley compartment.

15. A method of operating a beverage maker for a vehicle galley, the beverage maker comprising a housing comprising a dispensing region configured to receive a beverage container in a beverage receiving position, and a latching mechanism,
wherein the method comprises:
detecting the beverage container in the beverage receiving position;
wherein dependent on the beverage container being detected in the beverage receiving position, the method further comprises:
automatically moving the latching mechanism relative to the housing from a second position to a first position; and
dispensing a beverage into the beverage container;
wherein, when in the first position the latching mechanism is configured to retain the beverage container in the beverage receiving position, and when in the second position the latching mechanism is configured to allow the beverage container to be placed in or removed from the beverage receiving position.
